# EUROPÄISCHE PATENTSCHRIFT

(11) **EP 1 158 747 B1**
(45) Veröffentlichungstag und Bekanntmachung des Hinweises auf die Patenterteilung: **27.07.2005**
(21) Anmeldenummer: 01112307.2
(22) Anmeldetag: 19.05.2001
(51) Int. Cl.: H04L 29/06

(54) **Verfahren zum Übertragen von Daten**
Method for data transmission
Procédé de transmission de données

(30) Priorität: 26.05.2000 DE 10025929
(43) Veröffentlichungstag der Anmeldung: 28.11.2001
(73) Patentinhaber: BECKER GmbH, 76307 Karlsbad (DE)
(72) Erfinder: Brandes, Axel, 31246 Lahstedt OT. Adenstedt (DE); Behrens, Ralph, 31139 Hildesheim (DE)
(74) Vertreter: Patentanwälte Westphal, Mussgnug & Partner

(56) Entgegenhaltungen:
- EP-A- 0 973 350
- US-A- 5 732 074
- HUNT R: "Internet/Intranet firewall security-policy, architecture and transaction services" COMPUTER COMMUNICATIONS, BUTTERWORTHS & CO. PUBLISHERS LTD, GB, Bd. 21, Nr. 13, 1. September 1998 (1998-09-01), Seiten 1107-1123, XP004146571 ISSN: 0140-3664
- HECK P ET AL: "MEDIA ORIENTED SYNCHRONOUS TRANSFER - A NETWORK PROTOCOL FOR HIGH QUALITY, LOW COST TRANSFER OF SYNCHRONOUS, ASYNCHRONOUS, AND CONTROL DATA ON FIBER OPTIC" PREPRINTS OF PAPERS PRESENTED AT THE AES CONVENTION, XX, XX, Bd. 4551, Nr. 4551, September 1997 (1997-09), Seiten 1-10,5PAGES, XP001121596
- HUBBARD S D ET AL: "FIREWALLING THE NET" BT TECHNOLOGY JOURNAL, BT LABORATORIES, GB, Bd. 15, Nr. 2, 1. April 1997 (1997-04-01), Seiten 94-106, XP000703560 ISSN: 1358-3948

## Beschreibung

Die Erfindung betrifft ein Verfahren zum Übertragen von Daten zwischen einem Server und einem Datenverarbeitungsmodule aufweisenden Client gemäß dem Oberbegriff des Anspruchs 1 sowie ein Datenübertragungssystem zur Durchführung des Verfahrens gemäß dem Oberbegriff des Anspruchs 6.

Derartige Verfahren und Systeme sind beispielsweise in R. Hunt, "Internet/Intranet firewall security-policy architecture and transaction services", Computer Communications, Butterworth & Co. Publ. Ltd, GB, Bd 21, Nr. 13, 1 September 1998, seiten 1107-1123 beschrieben. Es werden im Wesentlichen zwei Grundprinzipien praktiziert:
1. Es wird eine direkte Verbindung vom Client zum Server aufgebaut. Bei einer solchen direkten Verbindung findet keine Überprüfung von übertragenen Daten statt. Dies bedeutet, dass sowohl ein freier Zugriff des Client auf den Server möglich ist, zum Anderen auch ein freier Zugriff des Servers auf den Client.
   Handelt es sich bei dem Server um einen solchen innerhalb eines öffentlichen Netzwerks, so hat prinzipiell jeder Teilnehmer des öffentlichen Netzes wie auch der Server selbst Zugriff auf den Client. Demzufolge ist auch ein unberechtigter Zugriff auf den Client möglich. In der Vergangenheit hat sich vielfach gezeigt, welche verheerenden Auswirkungen und Folgen ein solcher unberechtigter Zugriff haben kann. Umgekehrt ist es auch nicht erwünscht, dass jeder Benutzer des Client unbeschränkten Zugriff auf den Server hat.
2. Aus diesem Grund wurde das sogenannte Proxy-/Firewall-Konzept eingeführt. Dieses Verfahren besteht darin, dass zwischen Client und Server eine Verbindung über ein(e) Proxy-/Firewall aufgebaut wird, der/die eine Überprüfung der übertragenen Daten durchführen kann, allerdings keine direkte und gesicherte Verbindung zwischen Client und Server erlaubt.

Eine Firewall soll also im Idealfall folgende Aufgaben erfüllen:
a) sie soll den Client vor unbefugten Zugriffen von außen schützen,
b) sie soll definierte Zugriffe auf den Server gestatten,
c) sie soll definierte Zugriffe von dem Server auf den Client gestatten.

Der Nachteil dieses Systems besteht also insbesondere darin, dass aufgrund der ständigen Überprüfung der übertragenen Daten keine direkte und gesicherte Verbindung zwischen Client und Server möglich ist.

Der Erfindung liegt somit die Aufgabe zugrunde, ein Verfahren bzw. ein Datenübertragungssystem vorzustellen, bei dem eine direkte Verbindung zwischen Client und Server besteht, bei dem aber auch weiterhin eine Überprüfung der übertragenen Daten nach sicherheitsspezifischen Aspekten stattfinden kann, so dass ein unberechtigter Zugriff nicht möglich ist.

Diese Aufgabe wird durch ein Verfahren zum Übertragen von Daten zwischen einem Server und einem Datenverarbeitungsmodule aufweisenden Client mit den Merkmalen des kennzeichnenden Teiles des Anspruchs 1 bzw. durch ein Datenübertragungssystem mit den Merkmalen des kennzeichnenden Teiles des Anspruchs 6 erfindungsgemäß gelöst.

Vorteilhafte Ausführungen und Weiterbildungen der Erfindung sind in den Unteransprüchen angegeben.

Der wesentliche Gedanke der Erfindung besteht darin, dass zwischen dem Server und dem Client ein von der Firewall unbeeinflusster Datenverkehr durchgeführt wird und dass die Firewall lediglich dazu eingesetzt wird, eine Weiterverarbeitung und/oder Weiterleitung von nicht zugelassenen Daten zu und/oder von mindestens einem der Datenverarbeitungsmodule zu unterbinden.

In einer besonders vorteilhaften Ausführung der Erfindung ist vorgesehen, dass zwischen Server und mindestens einem zweiten Datenverarbeitungsmodul ein von der Firewall unbeeinflusster Datenverkehr durchgeführt wird. Dies ist insbesondere dann sinnvoll, wenn vorwiegend Informationen ausgetauscht werden sollen, welche nicht sicherheitsrelevante Daten beinhalten und aufgrund derer keine selbsttätigen Prozesse in Gang gesetzt werden. Dennoch ist weiterhin gewährleistet, dass der Datenfluss zwischen dem ersten Verarbeitungsmodul und dem Server nach sicherheitsspezifischen Aspekten untersucht und der Transfer ggf. unterbunden wird.

In einer weiteren Ausführungsform der Erfindung ist vorgesehen, dass zwischen mindestens einem zweiten Datenverarbeitungsmodul, bei dem ein von der Firewall unbeeinflusster Datenverkehr zum Server durchgeführt wird und mindestens einem ersten Datenverarbeitungsmodul, bei dem ein von der Firewall beeinflusster Datenverkehr zum Server durchgeführt wird, ein von der Firewall beeinflusster Datenverkehr durchgeführt wird. Diese Verbindung stellt einen schnellen Datenaustausch zwischen einzelnen gesicherten und ungesicherten Datenverarbeitungsmodulen sicher, ohne dabei auf sicherheitsspezifische Aspekte zu verzichten. Die Firewall hat also stets die volle Kontrolle auf alle Daten, die weiterverarbeitet werden sollen, unabhängig davon, ob sie über einen direkten ungesicherten Datenkanal oder einen gesicherten Datenkanal vom Server übertragen worden sind.

In einer weiteren besonders vorteilhaften Ausgestaltung des erfindungsgemäßen Verfahrens ist vorgesehen, dass mindestens einem ersten Datenverarbeitungsmodul von einem Datenträger bereitgestellte Daten zugeführt werden.

Es ist weiterhin vorgesehen, dass die Firewall dazu eingesetzt wird, eine Weiterverarbeitung und/oder Weiterleitung von nicht zugelassenen von dem Datenträger bereitgestellten Daten zu dem ersten Datenverarbeitungsmodul zu unterbinden.

Erfindungsgemäß wird auch ein Datenübertragungssystem zur Durchführung des angegebenen Verfahrens vorgestellt. Dieses Datenübertragungssystem basiert prinzipiell darauf, dass die Firewall zwischen einem Empfangsmodul und mindestens einem Datenverarbeitungsmodul innerhalb des Client geschaltet ist. Die Erfindung ermöglicht somit die Verwendung von standardkonformen und handelsüblichen Programmen zur Anbindung des Client an den Server. Dadurch können bei der Entwicklung Kosten gegenüber einer speziellen Client-Server-Anbindung eingespart werden, die zudem eine Absprache mit dem Serverbetreiber oder Diensteanbieter erfordern würde.

Erfindungsgemäß ist vorgesehen, dass an das Empfangsmodul mindestens ein zweites Datenverarbeitungsmodul geschaltet ist. Zu diesem zweiten Datenverarbeitungsmodul ist also ein ungehinderter Datentransfer möglich. Übertragungen, bei denen keine sicherheitsspezifischen Aspekte zu berücksichtigen sind, können problemlos über dieses zweite Datenverarbeitungsmodul abgewickelt werden.

Weiterhin ist vorgesehen, dass das zweite Datenverarbeitungsmodul mit der Firewall verbunden ist. Auf diese Weise ist zwischen dem ersten und dem zweiten Datenverarbeitungsmodul ein gesicherter Datentransport möglich. Ein unberechtigter Transfer vom Server via das zweite Datenverarbeitungsmodul auf das erste Datenverarbeitungsmodul ist nicht möglich.

Weiterhin ist vorgesehen, dass mindestens ein erstes Datenverarbeitungsmodul mit einem Datenträger verbunden ist.

Darüber hinaus ist vorgesehen, dass zwischen das erste Datenverarbeitungsmodul und den Datenträger die Firewall geschaltet ist.

Eine besonders vorteilhafte Ausführung der Erfindung sieht vor, dass das Empfangsmodul gleichzeitig ein Sendemodul ist. Dieses erlaubt zum einen die üblicherweise gewünschte Korrespondenz mit einem weiteren an den Server angeschlossenen Client, zum anderen den Abruf von Informationen vom Server.

In einer besonderen Ausgestaltung der Erfindung ist vorgesehen, dass der Server ein Netzwerkserver eines öffentlichen Netzes ist. Erfindungsgemäß ist folglich vorgegeben, dass das System nicht nur geeignet ist, den sicherheitsrelevanten Aspekten eines begrenzten (lokalen) Netzes zu genügen, sondern auch solchen eines öffentlich zugänglichen Netzes. Die angegebene Lösung erlaubt beispielsweise eine gesicherte Verbindung an öffentliche Server, um z. B. Bankgeschäfte zu tätigen, ohne auf eine Überprüfung der übertragenen Daten verzichten zu müssen. Sollten darüber hinaus in der Zukunft neue Übertragungsnetze entwickelt und eingesetzt werden, so bleibt der Aufwand zur Anpassung der vorgeschlagenen Lösung sehr klein, da keine Kenntnisse über die Übertragungstechnik selbst notwendig sind. Das Prinzip dieses vorgestellten Datenübertragungssystems ist also universell einsetzbar. So ist beispielsweise auch eine Anbindung an jeglichen Internetserver möglich.

Die Erfindung sieht weiterhin vor, dass das zweite Datenverarbeitungsmodul einen Browser-Client umfasst. Dieser Browser-Client kann einerseits ein spezieller Typ für mobile Netze sein, z.B. ein WAP-Browser, andererseits in der Zukunft auch ein vollwertiger Internet-Browser, z.B. Netscape-Communicator oder Microsoft Internet-Explorer. Somit ist vorteilhafterweise stets eine nahezu beliebige Kompatibilität gewährleistet.

Weiterhin ist erfindungsgemäß vorgesehen, dass das erste Datenverarbeitungsmodul ein Audiogerät und/oder ein Videogerät umfasst. Das Audiogerät enthält beispielsweise Funktionen wie Tuner, Verstärker oder Equalizer. Ein in das System integriertes Videogerät kann als Fernseher oder mit einer anzubindenden Kamera als Bildtelefon genutzt werden. Das erfindungsgemäße System erlaubt somit jeglichen und insbesondere auch interaktiven Datenverkehr.

Erfindungsgemäß ist in einer weiteren Variante vorgesehen, dass der Client Bestandteil einer mobilen Einheit ist.

Darüber hinaus ist vorgesehen, dass das erste Datenverarbeitungsmodul eine Navigationseinheit umfasst. Die Navigationseinheit kann Positionsdaten und auf dem Server berechneten Routen über die Verbindung an das öffentliche Netz empfangen und verarbeiten. Z.B. kann ein Speditionsunternehmen ihre Fahrer auf diese Weise mit neuen Aufträgen und Fahrstrecken informieren.

In einer weiteren Variante sieht die Erfindung vor, dass die mobile Einheit ein Automobil oder dergleichen ist.

In einer besonders vorteilhaften Ausführungsform der Erfindung ist vorgesehen, dass das erste Datenverarbeitungsmodul eine Telematik-Anwendung umfasst. Eine solche Telematik-Anwendung umfasst Telematikdienste wie dynamische Verkehrsinformationen (VINFO), Staumeldungen, Routenempfehlungen, Notrufdienste, Park- und (Verkehrs-)Leitinformationen etc. Diese Anwendungen bzw. Dienste sind hochsensibel gegenüber zu verarbeitenden Daten. Diese Daten sind insbesondere deshalb vor einer Übergabe an sowie einer Verarbeitung durch die Telematik-Anwendung auf korrekten Inhalt zu überprüfen, da syntaktisch korrekte Daten mit fehlerhafter Semantik die Funktion der Telematik-Anwendung und damit auch des betreffenden Automobils nachhaltig stören können.

Ein Ausführungsbeispiel der Erfindung ist in der Zeichnung dargestellt und wird im Folgenden näher beschrieben. Es zeigen:
- Figur 1: ein erstes Datenübertragungssystem gemäß dem Stand der Technik in Anlehnung an das Ausführungsbeispiel gemäß Figur 3,
- Figur 2: ein zweites Datenübertragungssystem gemäß dem Stand der Technik in Anlehnung an das Ausführungsbeispiel gemäß Figur 3,
- Figur 3: ein Ausführungsbeispiel eines Datenübertragungssystems gemäß der Erfindung,
- Figur 4: einen möglichen Datenfluss in der Firewall des Datenübertragungssystems gemäß Figur 3,
- Figur 5: verschiedene Szenarien für den Datenfluss in der Firewall des Datenübertragungssystems gemäß Figur 3,
A - Firmware update
B - Telematik-Anwendung
C - Audiodatenübertragung via WAP
- Figur 6: ein Datenfluss bei Anforderung einer Internetseite mit Telematik- (oder Audio-)daten in einem Übertragungssystem gemäß Figur 3.

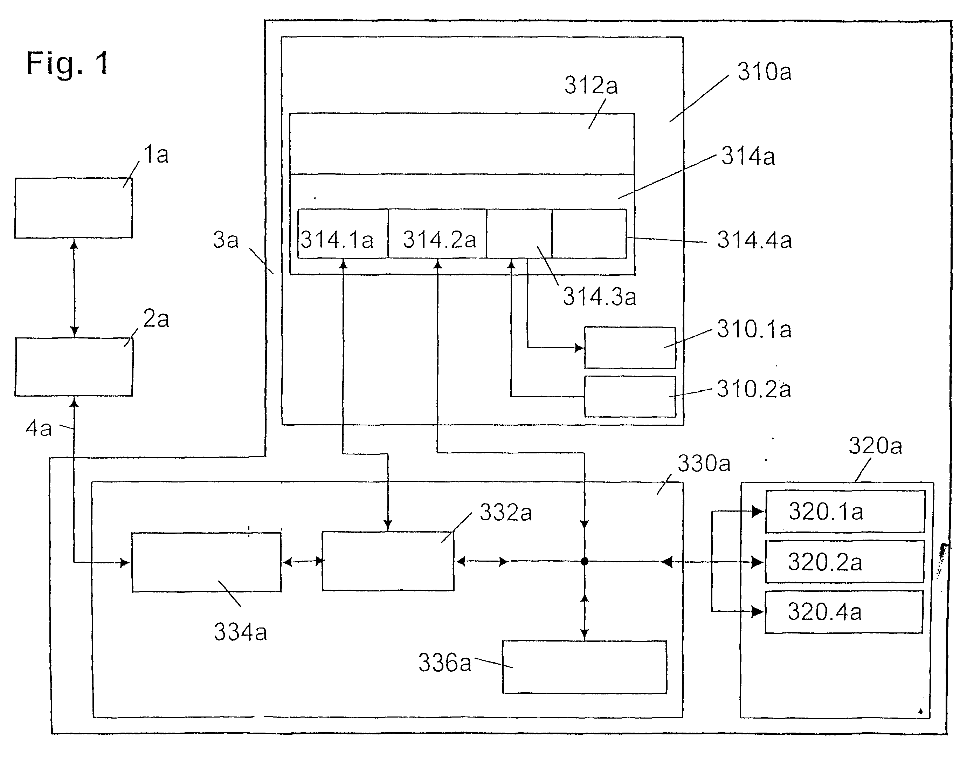

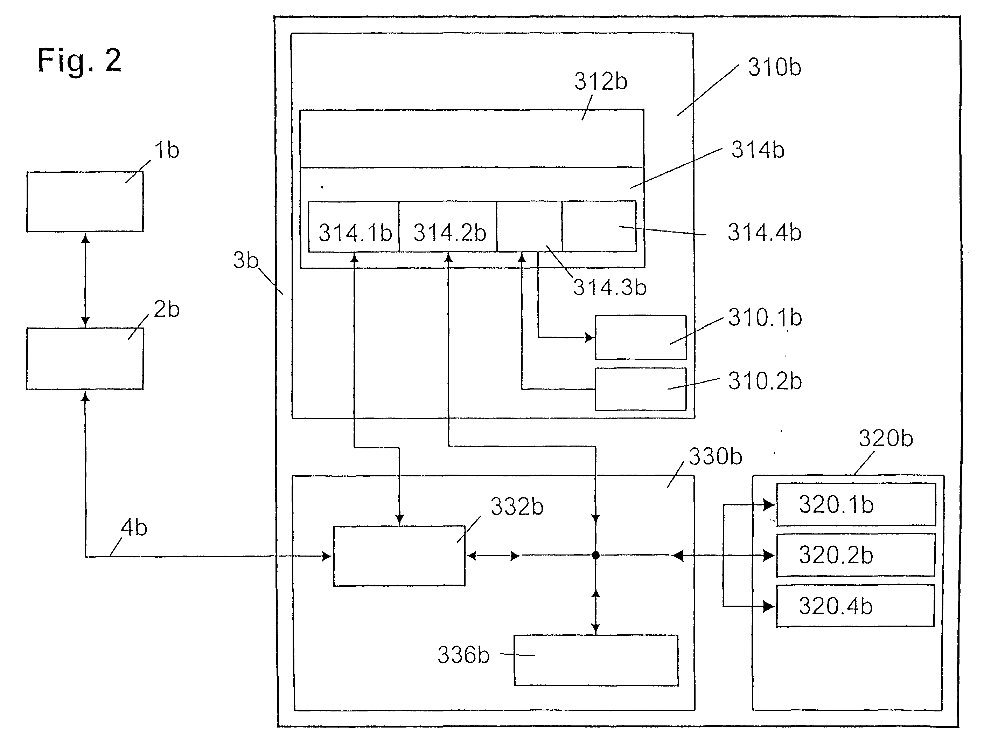

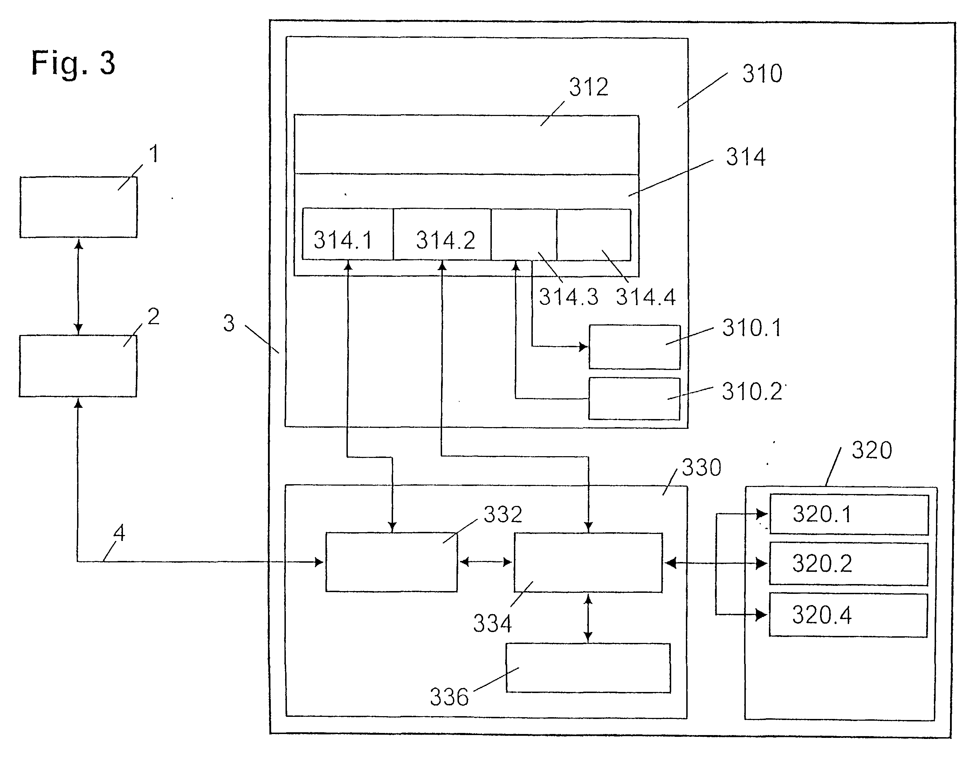

Die Figur 3 zeigt ein Ausführungsbeispiel eines Datenübertragungssystems gemäß der Erfindung. Zur Verdeutlichung wie sich dieses erfindungsgemäße Datenübertragungssystem von solchen gemäß dem Stand der Technik unterscheidet, zeigen die Figuren 1 und 2 Datenübertragungssysteme mit den wesentlichen Funktionselementen/-bestandteilen des Datenübertragungssystems gemäß der Figur 3.

Beispielhaft ist in allen drei Datenübertragungssystemen gemäß den Figuren 1 bis 3 die Anbindung eines Kraftfahrzeugs an öffentliche Netze gezeigt.

Das in Figur 2 dargestellte Datenübertragungssystem arbeitet nach dem unter Unterpunkt 1 vorgestellten Verfahren. Bei dem in der Figur 2 dargestellten Datenübertragungssystem gemäß dem Stand der Technik ist also keine Überprüfung von übertragenen Daten vorgesehen. Das System basiert somit im Wesentlichen auf einem Server 1b und einem Client 3b. Der Client 3b besteht im Wesentlichen aus einer Haupteinheit 310b, verschiedenen Endgeräten 320 b und dem sogenannten Communication Manager 330b.

Die Haupteinheit 310b besteht aus folgenden Komponenten:
- einem Browser Client 312b, welcher im Wesentlichen die Kontrolllogik enthält,
- verschiedenen Funktionseinheiten 314b, welche den Browser Client 312b mit verschiedenen Gerätefunktionalitäten bedienen,
- einer Anzeigeeinheit 310.1b und
- einer Eingabeeinheit 310.2b.

Die Anzeigeeinheit 310.1b und die Eingabeeinheit 310.2b sind die wesentlichen Bestandteile einer Bedieneinheit 314.3b. Zu den Funktionseinheiten 314b zählen im Wesentlichen ein Netzwerkzugang 314.1b, eine Einheit für lokale Dienste 314.2b, die bereits erwähnte Bedieneinheit 314.3b und mögliche weitere Einheiten, welche im Beispiel mit dem Bezugszeichen 314.4 gekennzeichnet sind.

Der Communication Manager 330b besteht im Wesentlichen aus einer Einheit für Netzwerkdienste 332b, welche dazu vorgesehen ist, die Haupteinheit 310 mit Netzwerkfunktionen zu beliefern, sowie einer Application Download 336b, welche das Herunterladen von Firm- und/oder Software kontrolliert.

Als Endgeräte 320b sind im Beispiel ein Navigationsgerät 320.1b und ein Audiogerät 320.2b exemplarisch dargestellt. Weitere Komponenten sind im vorliegenden Beispiel durch einen Schaltungsblock mit dem Bezugszeichen 320.4b gekennzeichnet.

Im Beispiel ist der Server 1b via den Gateway 2b mit der Einheit für Netzwerkdienste 332b verbunden. Die Server-Client-Verbindung 4b wird in Fachsprache aufgrund des Übertragungsmediums als "Air Link" bezeichnet. Darüber hinaus ist die Einheit für Netzwerkdienste 332b mit dem Netzwerkzugang 314.1b der Haupteinheit 310 verbunden. Ferner existieren Verbindungen zwischen den einzelnen Endgeräten 320b, wie z. B. einem Navigationsgerät 320.1b, einem Audiogerät 320.2b sowie den weiteren Geräten 320.4b und der Einheit für lokale Dienste 314.2b welche Bestandteil der Haupteinheit 310 ist.

Das in der Figur 1 dargestellte Datenübertragungssystem basiert auf einem geschützten Datentransfer zwischen Client und Server via einer Firewall (vgl. Unterpunkt 2).

Das System weist mit dem in der Figur 2 dargestellten System folgende Komponenten in identischer Form auf:

Das System basiert wiederum auf einem Server 1a und einem Client 3a. Der Client 3a besteht im Wesentlichen aus einer Haupteinheit 310a, verschiedenen Endgeräten 320a und dem sogenannten Communicatiön Manager 330a.

Die Haupteinheit 310a besteht wiederum aus den folgenden Komponenten:
- einem Browser Client 312a, welcher im Wesentlichen die Kontrolllogik enthält,
- verschiedenen Funktionseinheiten 314a, welche den Browser Client 312a mit verschiedenen Gerätefunktionalitäten bedienen,
- einer Anzeigeeinheit 310.1a und
- einer Eingabeeinheit 310.2a.

Die Anzeigeeinheit 310.1a und die Eingabeeinheit 310.2a sind die wesentlichen Bestandteile einer Bedieneinheit 314.3a. Zu den Funktionseinheiten 314a zählen ein Netzwerkzugang 314.1a, eine Einheit für lokale Dienste 314.2a, die Bedieneinheit 314.3a und mögliche weitere Einheiten 314.4.

Bei diesem in Figur 1 dargestellten Datenübertragungssystem weist jedoch der Communication Manager 330a zusätzlich eine Firewall 334a auf. Diese Firewall 334a ist zwischen Gateway 2a und der Einheit für Netzwerkdienste 332a geschaltet.

Die Figur 3 zeigt demgegenüber ein entsprechendes Datenübertragungssystem gemäß der Erfindung. Dieses Datenübertragungssystem weist wie die in den Figuren 1 und 2 dargestellten Datenübertragungssysteme folgende Komponenten in identischer Weise auf:

Das Gesamtsystem basiert auf einem Server 1 und einem Client 3. Der Client 3 besteht aus einer Haupteinheit 310, verschiedenen Endgeräten 320a und dem Communication Manager 330.

Die Haupteinheit 310 besteht aus folgenden Komponenten:
- einem Browser Client 312, welcher die Kontrolllogik enthält,
- verschiedenen Funktionseinheiten 314, welche den Browser Client 312 mit verschiedenen Gerätefunktionalitäten bedienen,
- einer Anzeigeeinheit 310.1 und
- einer Eingabeeinheit 310.2.

Die Anzeigeeinheit 310.1 und die Eingabeeinheit 310.2 sind die wesentlichen Bestandteile einer Bedieneinheit 314.3. Zu den Funktionseinheiten 314 zählen ein Netzwerkzugang 314.1, eine Einheit für lokale Dienste 314.2, die bereits erwähnte Bedieneinheit 314.3 und mögliche weitere Einheiten 314.4.

Das Datenübertragungssystem gemäß der Figur 3 weist wie das Datenübertragungssystem der Figur 1 eine Firewall 334 auf. Diese Firewall 334 ist jedoch nicht wie im Beispiel gemäß der Figur 1 zwischen Gateway 2 und der Einheit für Netzwerkdienste 332 angeordnet, sondern zwischen der Einheit für Netzwerkdienste 332 und den einzelnen Endgeräten 320, als da wären: das Navigationsgerät 320.1, das Audiogerät 320.2 und die mit dem Bezugszeichen 320.4 gekennzeichneten weiteren Geräte. Des weiteren ist die Firewall 334 mit der Application Download 336 verbunden sowie mit der Einheit für lokale Dienste 314.2.

Wie im vorangegangenen Beispiel gemäß Figur 1 sind die Einheit für Netzwerkdienste 332, die Firewall 334 und die Application Download 336 Bestandteil des Communication Managers 330.

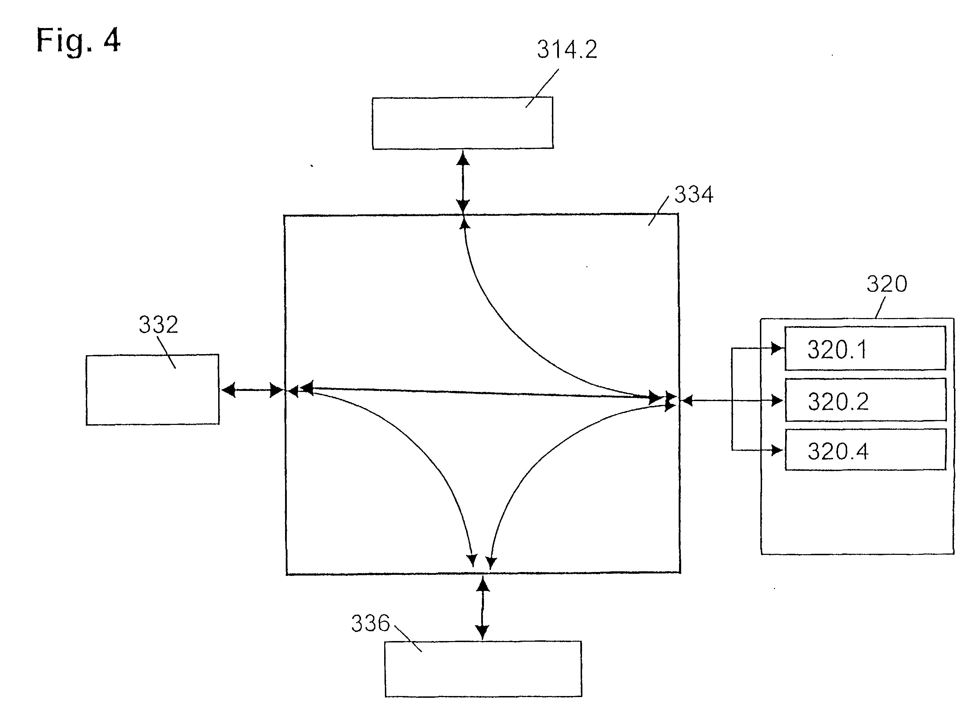

Die Figur 4 zeigt zwischen welchen der an die Firewall 334 angeschlossenen Komponenten ein Datenfluss möglich ist. Der Figur 4 ist zu entnehmen, dass die Firewall 334 einen Datenfluss zwischen der Einheit für lokale Dienste 314.2 des Browser Client 312 und den einzelnen Endgeräten 320, d. h. dem Navigationsgerät 320.1, dem Audiogerät 320.2 und den weiteren Geräten 320.4, darüber hinaus zwischen der Application Download 336 und diesen Endgeräten 320 sowie der Application Download 336 und der Einheit für Netzwerkdienste 332 zulässt. Außerdem ist ein Datenfluss zwischen der Einheit für Netzwerkdienste 332 und den Endgeräten 320 möglich.

Zur Verdeutlichung des Erfindungsprinzips werden im Folgenden beispielhaft vier Szenarien eines Datentransfers via Firewall 334 vorgestellt. Beispielszenario 1 demonstriert wie ein firmware-update der Navigationseinheit vonstatten geht, Szenario 2 zeigt den Aufruf einer Internetseite, Beispielszenario 3 beschreibt eine Telematik-Anwendung und Szenario 4 beispielhaft den Empfang eines Audiosignals via WAP. Im Anschluss daran wird jeweils gezeigt, ob und wie ein Datentransfer in den Datenübertragungssystemen gemäß den Figuren 1 und 2 gemäß dem Stand der Technik erfolgt.

### Beispielszenario 1: Firmware-Update der Navigationseinheit

### a) im Datenübertragungssystem nach Fig. 3

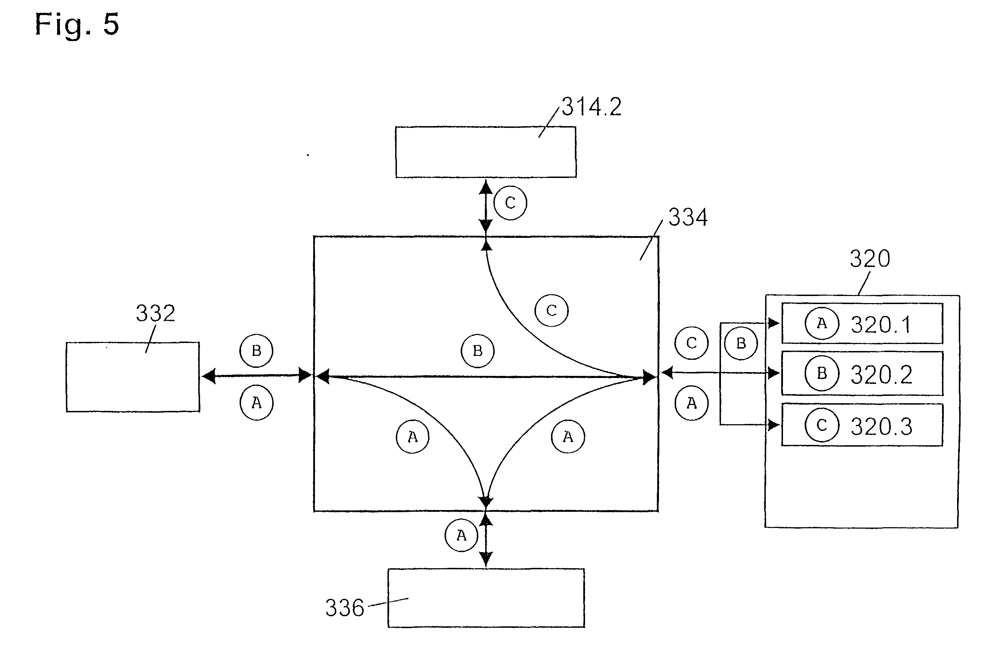

Der Server 1 kann selbständig einen Firmenware-Update der Navigationseinheit 320.1 initiieren. Dazu schickt er spezielle Nachrichten an das Modul Application-Download 336 über die Einheit für Netzwerkdienste 332 und die Firewall 334 im Communikation Manager 330. Hier ist die Firewall 334 in der Lage, die Daten zu überprüfen und ggf. zu verwerfen. Der Datenfluss dieses Szenarios ist in der Figur 5 mit dem Bezugszeichen A gekennzeichnet.

### b) im Datenübertragungssystem nach Fig. 1

Der Server ist in der Regel nicht in der Lage, selbständig einer solchen Firmware-Update durchzuführen, da die Firewall 334a einen solchen nicht zulassen wird.

### c) im Datenübertragungssystem nach Fig. 2

Der Server kann selbständig einen Firmware-Update der Navigationseinheit 320.1b initiieren und durchführen. Der Vorgang erfolgt analog zu a), jedoch ist keine Datenkontrolle vorgesehen. Ein gegen unbefugten Zugriff gesicherter Datentransfer ist nicht gewährleistet.

### Beispielszenario 2: Aufruf einer Internetseite vom Server

### a) im Datenübertragungssystem nach Fig. 3

Der Benutzer ruft im Browser Client 312 eine Seite aus dem Internet (Server 1) auf und bekommt diese direkt auf der Anzeigeeinheit 310.1 angezeigt. Sofern es sich lediglich um ein Abrufen der Anzeigen von Informationen handelt, findet die Kommunikation im standardisierten Bereich zwischen Browser Client 312 und Server 1 statt. Ein Datentransfer via die Firewall 334 findet nicht statt. Im Prinzip kann jede beliebige Internetseite aufgerufen und angezeigt werden. Welche Seiten angezeigt werden, hängt lediglich von dem verwendeten Browser Client 312 ab.

Sobald fahrzeugspezifische Daten heruntergeladen werden und weiterverarbeitet werden sollen, z. B. die Übergabe von Positionsdaten an die Navigationseinheit 320.1, so werden diese Daten durch die Firewall 334 des Communicationmanagers 330 überprüft und anschließend weitergereicht oder verworfen. Bei einem Weiterreichen der Daten findet der Datenfluss also durch die Firewall 334 statt. Dieser Datenfluss ist in der Figur 5 mit den Bezugszeichen B gekennzeichnet.

### b) im Datenübertragungssystem nach Fig. 1

Auch hier kann eine Internetseite aufgerufen werden. Jedoch erfolgt stets eine Überprüfung eingehender Daten auf sicherheitsspezifische Aspekte hin statt. Eine direkte Verbindung ist nicht möglich. Der Datenverkehr ist gehemmt.

Werden tatsächlich sicherheitsrelevante Daten übertragen, so ist diese ständige Überprüfung sinnvoll. Ansonsten tritt ein störender Verzögerungseffekt ein.

### c) in Datenübertragungssystem nach Fig. 2

Der Aufruf einer Internetseite ist stets möglich. Es findet ein ungehinderter Datenverkehr statt. Selbst sicherheitsrelevante Daten werden nicht überprüft.

### Beispielszenario 3: Telematik-Anwendung

### a) in Datenübertragungssystem nach Fig. 3

Es gibt spezielle Verfahren, um Telematik-Daten in das Kraftfahrzeug zu übertragen. Diese Daten können zum Beispiel Verkehrsinformationen, Stauinformationen oder Unfallinformationen sein. Die werden direkt von einem speziellen Server an die Navigationseinheit übertragen.

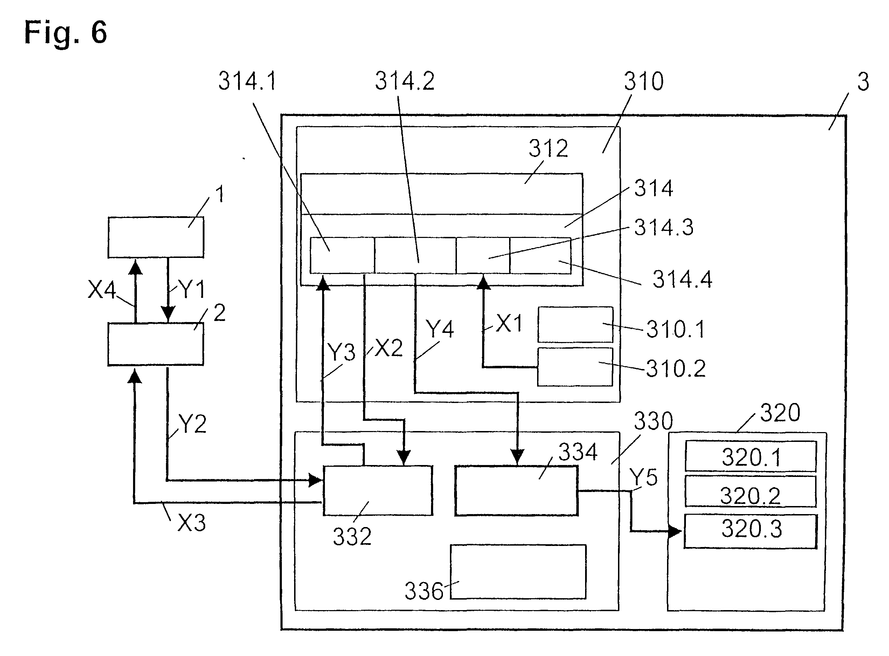

Der Datenabruf erfolgt in der Regel vom Bediener via die Bedieneinheit 314.3 bzw. die Eingabeeinheit 310.2, dem Netzwerkzugang 314.1, die Einheit für Netzwerkdienste 332, den Gateway 2 zu Server 1. Dieser Anforderungsdatenstrom, d. h. der Weg der Datenanforderung ist in der Fig. 6 mit dem Bezugszeichen X1, X2, X3 und X4 gekennzeichnet.

Die Datenübermittlung erfolgt dann vom Server 1 über den Gateway 2 zur Einheit für Netzwerkdienste 332 und von dort weiter über den Netzwerkzugang 314.1, die Einheit für lokale Dienste 314.2, die Firewall 334 zur Telematik-Anwendung 320.3. Der Weg der Datenübermittlung ist in der Fig. 6 mit den Bezugszeichen Y1, Y2, Y3, Y4 und Y5 gekennzeichnet.

Den Datenfluss in der Firewall 304 zeigen die Pfeile mit den Bezugszeichen C in der Fig. 5.

Für den Datentransfer in den Datenübertragungssystemen gemäß dem Stand der Technik nach Fig. 1 und 2 gelten die Ausführungen zu den Beispielszenarien 1 und 2 analog.

### Beispielszenario 4: Empfang eines Audiosignals via WAP

### a) in Datenübertragungssystem nach Fig. 3

Der Benutzer des Fahrzeugs ruft beispielsweise eine Internetseite auf, die Audiodaten anbietet. Der Benutzer sucht sich eine Audiodatei aus, die anschließend an das Audiomodul übertragen wird. Die Audioeinheit spielt diesen Audiodatenstrom dann ab.

Für den Datentransfer in den Systemen gemäß den Fig. 1 und 2 gelten die Ausführungen zu den Beispielsszenarien 1 und 2 analog.

### Bezugszeichenliste

- 1: Server
- 2: Gateway
- 3: Client
- 4: Server-Client-Verbindung
- 310: Haupteinheit
- 310.1: Anzeigeeinheit
- 310.2: Eingabeeinheit
- 312: Browser Client
- 314: Funktionseinheiten
- 314.1: Netzwerkzugang
- 314.2: Einheit für lokale Dienste
- 314.3: Bedieneinheit
- 314.4: Weitere Einheiten
- 320: Endgeräte
- 320.1: Navigationsgerät
- 320.2: Audiogerät
- 320.3: Telematik-Anwendung
- 320.4: Weitere Geräte
- 330: Communication Manager
- 332: Einheit für Netzwerkdienste
- 334: Firewall
- 336: Application Download

- 1a: Server
- 2a: Gateway
- 3a: Client
- 4a: Server-Client-Verbindung
- 310a: Haupteinheit
- 310.1a: Anzeigeeinheit
- 310.2a: Eingabeeinheit
- 312a: Browser Client
- 314a: Funktionseinheiten
- 314.1a: Netzwerkzugang
- 314.2a: Einheit für lokale Dienste
- 314.3a: Bedieneinheit
- 314.4a: Weitere Einheiten
- 320a: Endgeräte
- 320.1a: Navigationsgerät
- 320.2a: Audiogerät
- 320.3a: Telematik-Anwendung
- 320.4a: Weitere Geräte
- 330a: Communication Manager
- 332a: Einheit für Netzwerkdienste
- 334a: Firewall
- 336a: Application Download

- 1b: Server
- 2b: Gateway
- 3b: Client
- 4b: Server-Client-Verbindung
- 310b: Haupteinheit
- 310.1b: Anzeigeeinheit
- 310.2b: Eingabeeinheit
- 312b: Browser Client
- 314b: Funktionseinheiten
- 314.1b: Netzwerkzugang
- 314.2b: Einheit für lokale Dienste
- 314.3b: Bedieneinheit
- 314.4b: Weitere Einheiten
- 320b: Endgeräte
- 320.1b: Navigationsgerät
- 320.2b: Audiogerät
- 320.3b: Telematik-Anwendung
- 320.4b: Weitere Geräte
- 330b: Communication Manager
- 332b: Einheit für Netzwerkdienste
- 336b: Application Download

- A: Datenfluss
- B: Datenfluss
- C: Datenfluss

- X1: Datenanforderung
- X2: Datenanforderung
- X3: Datenanforderung
- X4: Datenanforderung

- Y1: Datenübermittlung
- Y2: Datenübermittlung
- Y3: Datenübermittlung
- Y4: Datenübermittlung
- Y5: Datenübermittlung

## Patentansprüche

1. Verfahren zum Übertragen von Daten zwischen einem Server und einem Datenverarbeitungsmodule aufweisenden Client mit einer Firewall, durch welche übertragene Daten nach sicherheitsspezifischen Aspekten untersucht werden und die Weiterverarbeitung zugelassen oder unterbunden wird, **dadurch gekennzeichnet,**
**dass** zwischen dem Server (1) und dem Client (3) ein von der Firewall (334) nicht beeinflusster Datenverkehr durchgeführt wird,
**dass** die Firewall (334) eine Weiterverarbeitung und/oder Weiterleitung von nicht zugelassenen Daten zu und/oder von mindestens einem ersten Datenverarbeitungsmodul (320) beeinflusst und
**dass** die Firewall (334) eine Weiterverarbeitung und/oder Weiterleitung von nicht zugelassenen Daten zu und/oder von mindestens einem zweiten Datenverarbeitungsmodul (320) nicht beeinflusst.

2. Verfahren nach Anspruch 1, **dadurch gekennzeichnet, dass** zwischen dem Server (1) und dem mindestens einen zweiten Datenverarbeitungsmodul (310) ein Datenverkehr, bei dem keine sicherheitsspezifischen Aspekte zu berücksichtigen sind, durchgeführt wird.

3. Verfahren nach Anspruch 1 oder 2, **dadurch gekennzeichnet, dass** zwischen dem mindestens einen zweiten Datenverarbeitungsmodul (310), bei dem ein von der Firewall (334) nicht beeinflusster Datenverkehr zum Server (1) geführt wird, und dem mindestens einen ersten Datenverarbeitungsmodul (320), bei dem ein von der Firewall (334) beeinflusster Datenverkehr zum Server (1) durchgeführt wird, ein von der Firewall (334) beeinflusster Datenverkehr durchgeführt wird.

4. Verfahren nach einem der vorangegangenen Ansprüche, **dadurch gekennzeichnet, dass** dem mindestens einem ersten Datenverarbeitungsmodul (320) von einem Datenträger (336) bereitgestellte Daten zugeführt werden.

5. Verfahren nach Anspruch 4, **dadurch gekennzeichnet, dass** die Firewall (334) dazu eingesetzt wird, eine Weiterverarbeitung und/oder Weiterleitung von nicht zugelassenen von dem Datenträger (336) bereitgestellten Daten zu dem ersten Datenverarbeitungsmodul (320) zu unterbinden.

6. Datenübertragungssystem mit einem Server, einem Datenverarbeitungsmodule aufweisenden Client und einer Firewall, durch welche übertragene Daten nach sicherheitsspezifischen Aspekten untersucht werden und davon abhängig die Weiterverarbeitung zugelassen oder unterbunden wird, **dadurch gekennzeichnet,**
**dass** der Client eine Einheit für Netzwerkdienste (332), mindestens ein erstes Datenverarbeitungsmodul (320) und mindestens ein zweites Datenverarbeitungsmodul (310) aufweist, und
**dass** die Firewall (334) zwischen die Einheit für Netzwerkdienste (332) und dem mindestens einen ersten Datenverarbeitungsmodul (320) geschaltet ist.

7. Datenübertragungssystem nach Anspruch 6,
**dadurch gekennzeichnet, dass** zwischen dem Server (1) und dem mindestens einen zweiten Datenverarbeitungsmodul (310) ein Datenverkehr, bei dem keine sicherheitsspezifischen Aspekte zu berücksichtigen sind, durchgeführt wird.

8. Datenverarbeitungssystem nach Anspruch 6 oder 7,
**dadurch gekennzeichnet, dass** das mindestens eine zweite Datenverarbeitungsmodul (310) mit der Firewall (334) verbunden ist.

9. Datenverarbeitungssystem nach einem der Ansprüche 6 bis 8,
**dadurch gekennzeichnet, dass** das mindestens eine erste Datenverarbeitungsmodul (320) mit einem Datenträger (336) verbunden ist.

10. Datenübertragungssystem nach Anspruch 9, **dadurch gekennzeichnet, dass** die Firewall (334) zwischen das erste Datenverarbeitungsmodul (320) und den Datenträger (336) geschaltet ist.

11. Datenübertragungssystem nach einem der Ansprüche 6 bis 10, **dadurch gekennzeichnet, dass** die Einheit für Netzwerkdienste (332) gleichzeitig zum Senden und Empfangen vorgesehen ist.

12. Datenübertragungssystem nach einem der Ansprüche 6 bis 11, **dadurch gekennzeichnet, dass** der Server (1) ein Netzwerkserver eines öffentlichen Netzes ist.

13. Datenübertragungssystem nach Anspruch 12, **dadurch gekennzeichnet, dass** der Netzwerkserver ein Internetserver ist.

14. Datenübertragungssystem nach einem der Ansprüche 7 bis 13, **dadurch gekennzeichnet, dass** das zweite Datenverarbeitungsmodul (310) einen Browser Client (312) umfasst.

15. Datenübertragungssystem nach Anspruch 14, **dadurch gekennzeichnet, dass** der Browser Client (312) ein WAP-Browser und/oder ein Internet-Browser ist.

16. Datenübertragungssystem nach einem der Ansprüche 6 bis 15, **dadurch gekennzeichnet, dass** das erste Datenverarbeitungsmodul (320) ein Audiogerät (320.2) und/oder und Videogerät umfasst.

17. Datenübertragungssystem nach einem der Ansprüche 6 bis 16, **dadurch gekennzeichnet, dass** der Client (3) Bestandteil einer mobilen Einheit ist.

18. Datenübertragungssystem nach Anspruch 17, **dadurch gekennzeichnet, dass** das erste Datenverarbeitungsmodul (320) eine Navigationseinheit (320.1) umfasst.

19. Datenübertragungssystem nach Anspruch 18, **dadurch gekennzeichnet, dass** die mobile Einheit ein Automobil oder dergleichen ist.

20. Datenübertragungssystem nach einem der Ansprüche 6 bis 19, **dadurch gekennzeichnet, dass** das erste Datenverarbeitungsmodul (320) eine Telematik-Anwendung (320.3) umfasst.

## Claims

1. Method of transferring data between a server and a client having data processing modules with a firewall by which transferred data are checked according to security-specific aspects and the further processing is allowed or prohibited, **characterised in that** data traffic which is not influenced by the firewall (334) is carried out between the server (1) and the client (3), that the firewall (334) influences further processing and/or forwarding of disallowed data to and/or from at least one first data processing module (320), and that the firewall (334) does not influence further processing and/or forwarding of disallowed data to and/or from at least one second data processing module (320).

2. Method as claimed in Claim 1, **characterised in that** data traffic in which no security-specific aspects are to be taken into account is carried out between the server (1) and the at least one second data processing module (310).

3. Method as claimed in either Claim 1 or Claim 2, **characterised in that** data traffic which is influenced by the firewall (334) is carried out between the at least one second data processing module (310), in which data traffic which is not influenced by the firewall (334) is carried out with the server, and the at least one first data processing module (320), in which data traffic which is influenced by the firewall (334) is carried out with the server (1).

4. Method as claimed in any one of the preceding claims, **characterised in that** data provided by a data carrier (336) are supplied to the at least one first data processing module (320).

5. Method as claimed in Claim 4, **characterised in that** the firewall (334) is used in order to prevent further processing and/or forwarding to the first data processing module (320) of disallowed data provided by the data carrier (336).

6. Data transmission system comprising a server, a client having data processing modules and a firewall, by which transferred data are checked according to security-specific aspects and in dependence thereon the further processing is allowed or prohibited, **characterised in that** the client has a unit for network services (332), at least one first data processing module (320) and at least one second data processing module (310), and that the firewall (334) is arranged between the unit for network services (332) and the at least one first data processing module (320).

7. Data transmission system as claimed in Claim 6, **characterised in that** data traffic in which no security-specific aspects are to be taken into account is carried out between the server (1) and the at least one second data processing module (310).

8. Data processing system as claimed in Claim 6 or 7, **characterised in that** the at least one second data processing module (310) is connected to the firewall (334).

9. Data processing system as claimed in any one of Claims 6 to 8, **characterised in that** the at least one first data processing module (320) is connected to a data carrier (336).

10. Data transmission system as claimed in Claim 9, **characterised in that** the firewall (334) is arranged between the first data processing module (320) and the data carrier (336).

11. Data transmission system as claimed in any one of Claims 6 to 10, **characterised in that** the unit for network services (332) is simultaneously provided for transmitting and receiving.

12. Data transmission system as claimed in any one of Claims 6 to 11, **characterised in that** the server (1) is a network server of a public network.

13. Data transmission system as claimed in Claim 12, **characterised in that** the network server is an Internet server.

14. Data transmission system as claimed in any one of Claims 7 to 13, **characterised in that** the second data processing module (310) comprises a browser client (312).

15. Data transmission system as claimed in Claim 14, **characterised in that** the browser client (312) is a WAP browser and/or an Internet browser.

16. Data transmission system as claimed in any one of Claims 6 to 15, **characterised in that** the first data processing module (320) is an audio device (320.2) and/or a video device.

17. Data transmission system as claimed in any one of Claims 6 to 16, **characterised in that** the client (3) is a component of a mobile unit.

18. Data transmission system as claimed in Claim 17,
**characterised in that** the first data processing module (320) comprises a navigation unit (320.1).

19. Data transmission system as claimed in Claim 18, **characterised in that** the mobile unit is an automobile or the like.

20. Data transmission system as claimed in any one of Claims 6 to 19, **characterised in that** the first data processing module (320) comprises a telematic application (320.3).

## Revendications

1. Procédé de transmission de données entre un serveur et un client comportant des modules de traitement de données avec un pare-feu, au moyen duquel des données transmises sont examinées selon des aspects spécifiques concernant la sécurité et le traitement est autorisé ou empêché, **caractérisé en ce qu'**
un trafic de données non influencé par le pare-feu (334) s'effectue entre le serveur (1) et le client (3),
**en ce que**
le pare-feu (334) influe sur un traitement et/ou une transmission de données non autorisées vers et/ou à partir d'au moins un premier module de traitement de données (320),
et **en ce que**
le pare-feu (334) n'influe pas sur le traitement et/ou la transmission de données non autorisées vers et/ou à partir d'au moins un second module de traitement de données (320).

2. Procédé selon la revendication 1, **caractérisé en ce qu'**entre le serveur (1) et au moins un second module de traitement de données (310) s'effectue un trafic de données, pour lequel aucun aspect spécifique concernant la sécurité ne doit être pris en considération.

3. Procédé selon la revendication 1 ou 2, **caractérisé en ce qu'**un trafic de données influencé par le pare-feu (334) s'effectue entre au moins le second module de traitement de données (310) où un flux de données non influencé par le pare-feu (334) est amené au serveur (1), et au moins le premier module de traitement de données (320) où un flux de données influencé par le pare-feu (334) s'effectue vers le serveur (1).

4. Procédé selon l'une des revendications précédentes, **caractérisé en ce que** des données mises à disposition par un support de données (336) sont amenées à au moins un premier module de traitement de données (320).

5. Procédé selon la revendication 4, **caractérisé en ce que** le pare-feu (334) est utilisé pour empêcher un traitement et/ou une transmission de données non autorisées mises à disposition par le support de données (336) vers le premier module de traitement de données (320).

6. Système de transmission de données avec un serveur, un client comportant des modules de traitement de données et un pare-feu, au moyen duquel des données transmises sont examinées selon des aspects spécifiques à la sécurité et en fonction de cela le traitement est autorisé ou empêché, **caractérisé en ce que**
le client comporte une unité pour des services de réseau (332), au moins un premier module de traitement de données (320) et au moins un second module de traitement de données (310),et **en ce que**
le pare-feu (334) est connecté entre l'unité pour les services de réseau (332) et au moins le premier module de traitement de données (320).

7. Système de transmission de données selon la revendication 6, **caractérisé en ce qu'**un trafic de données s'effectue entre le serveur (1) et au moins le second module de traitement de données (310), trafic pour lequel aucun aspect spécifique à la sécurité ne doit être pris en considération.

8. Système de transmission de données selon la revendication 6 ou 7, **caractérisé en ce qu'**au moins le second module de traitement de données (310) est relié au pare-feu (334).

9. Système de transmission de données selon l'une des revendications 6 à 8, **caractérisé en ce qu'**au moins le premier module de traitement de données (320) est relié à un support de données (336).

10. Système de transmission de données selon la revendication 9, **caractérisé en ce que** le pare-feu (334) est connecté entre le premier module de traitement de données (320) et le support de données (336).

11. Système de transmission de données selon l'une des revendications 6 à 10, **caractérisé en ce que** l'unité pour les services de réseau (332) est prévue simultanément pour l'émission et la réception.

12. Système de transmission de données selon l'une des revendications 6 à 11, **caractérisé en ce que** le serveur (1) est un serveur de réseau d'un réseau public.

13. Système de transmission de données selon la revendication 12,
**caractérisé en ce que** le serveur de réseau est un serveur Internet.

14. Système de transmission de données selon l'une des revendications 7 à 13, **caractérisé en ce que** le second module de traitement de données (310) comprend un navigateur client (312).

15. Système de transmission de données selon la revendication 14, **caractérisé en ce que** le navigateur client (312) est un navigateur WAP et/ ou un navigateur Internet.

16. Système de transmission de données selon l'une des revendications 6 à 15, **caractérisé en ce que** le premier module de traitement de données (320) comprend un appareil audio (320.2) et/ ou un appareil vidéo.

17. Système de transmission de données selon l'une des revendications 6 à 16, **caractérisé en ce que** le client (3) fait partie d'une unité mobile.

18. Système de transmission de données selon la revendication 17, **caractérisé en ce que** le premier module de traitement de données (320) comprend une unité de navigation (320.1)

19. Système de transmission de données selon la revendication 18, **caractérisé en ce que** l'unité mobile est une automobile ou similaire.

20. Système de transmission de données selon l'une des revendications 6 à 19, **caractérisé en ce que** le premier module de traitement de données (320) comprend une application télématique (320.3).
